# EUROPÄISCHE PATENTANMELDUNG

(11) **EP 3 806 018 A1**
(43) Veröffentlichungstag der Anmeldung: **14.04.2021**
(21) Anmeldenummer: 20200479.2
(22) Anmeldetag: 07.10.2020
(51) Int. Cl.: G06Q 30/02, G06Q 50/16

(54) **VERFAHREN ZUM BEREITSTELLEN EINES ELEKTRONISCHEN DREIDIMENSIONALEN GEBÄUDE- ODER WOHNUNGSPLANS, SOWIE VERFAHREN UND SYSTEM ZUR VISUALISIERUNG VON GEBÄUDE- UND WOHNUNGSPLÄNEN**

(30) Priorität: 07.10.2019 AT 5017719 U
(71) Anmelder: MS Virtual Constructions GmbH, 9020 Klagenfurt am Wörthersee (AT)
(72) Erfinder: Mödritscher, Peter, 9020 Klagenfurt (AT)
(74) Vertreter: Margotti, Herwig Franz

(57) **Zusammenfassung**

Ein elektronischer dreidimensionaler Gebäude- oder Wohnungsplans (17) wird bereitgestellt durch Isolieren des Grundrisses (11) des Gebäudes oder der Wohnung aus einem CAD-Gebäude- oder Wohnungsplan (10), Umwandeln des isolierten Grundrisses (11) in ein 3D-Grundmodell (12), Erkennen von Objekten im Gebäude- oder Wohnungsplan (10), Generieren von Platzhalter-Objekten (13', 14', 15', 16') der erkannten Objekte (13, 14, 15, 16), Generieren des elektronischen dreidimensionalen Gebäude- oder Wohnungsplans (17) durch Einfügen der Platzhalter-Objekte (13', 14', 15', 16') in das 3D-Grundmodell (12), und Bereitstellen des dreidimensionalen Gebäude- oder Wohnungsplans (17) auf einem Server (3). Die Visualisierung des Gebäude- oder Wohnungsplans (17) erfolgt mittels eines Virtual Reality Systems (1), das eine Virtual Reality Brille (4) einen mit der Virtual Reality Brille (4) oder dem Virtual Reality Headset verbundenen Virtual Reality Rechner (6) umfasst, auf dem eine Virtual Reality Visualisierungssoftware läuft, die den Gebäude- oder Wohnungsplan (17) in der Virtual Reality Brille (4) dreidimensional darstellt.

## Beschreibung

Die Erfindung umfasst ein Verfahren zum Bereitstellen eines elektronischen dreidimensionalen Gebäude- oder Wohnungsplans aus einem computerlesbaren Gebäude- oder Wohnungsplan.

Die Erfindung umfasst weiters ein Verfahren und ein System zur Visualisierung von Gebäude- und Wohnungsplänen.

Wenn man vor dem Kauf bzw. Mieten einer neuen Wohnung steht, hat man bis auf einen Gebäudeplan bzw. Wohnungsgrundriss üblicherweise keine Anhaltspunkte, wie das neue Heim aussehen wird. Das Problem mit diesen Grundrissplänen liegt darin, dass sich die meisten Menschen sehr schwer tun, sich die Räume und Raumaufteilung vorzustellen oder eine Vorstellung zu entwickeln, wie der Raum möbliert ausschauen könnte. Dies führt einerseits zu Unsicherheit beim Kauf oder Mietabschluss für eine Immobilie, andererseits nach dem Kauf oder Mietabschluss oft zu Unzufriedenheit, weil sich zeigt, dass die Vorstellungen mit der Realität nicht übereinstimmen, gewisse Nachteile und Beschränkungen der Räume und Raumaufteilungen nicht rechtzeitig erkannt wurden, oder einfach der optische Eindruck der gewählten Farben und Materialien in der Realität nicht mit der Vorstellung übereinstimmt.

Es gibt bereits Softwarelösungen, die Unterstützung bei der Darstellung von Räumen und ihrer Möblierung bieten. Beispielsweise hat die Firma Autodesk verschiedene Softwarelösungen zum Erstellen von zweidimensionalen und dreidimensionalen Gebäudeplänen entwickelt. Der Nachteil an diesen Softwarepaketen ist, dass kein Rendering der Raumdarstellung in Echtzeit erfolgen kann. Um realitätsnahe Darstellungen von Gebäuden mithilfe dieser Software zu erhalten, sind Renderingzeiten von mehreren Minuten die Regel.

Ein Ansatz zur Überwindung dieser Beschränkungen ist die Verwendung von Virtual Reality (abgekürzt VR) Technologie, die es ermöglicht, in digitale Welten einzutauchen. Anders als auf einem PC Bildschirm fühlt es sich für den Benutzer an, als wäre er innerhalb dieser virtuellen Welt. Allerdings weisen herkömmliche VR Systeme den Nachteil auf, dass ihre Benutzung ein hohes Maß an Erfahrung im Umgang mit diesen Systemen voraussetzt und sie daher von ungeübten Benutzern, wie es die potentiellen Käufer oder Mieter einer Immobilie zumeist sind, nicht sinnvoll eingesetzt werden können.

Es besteht daher nach wie vor ein großer Bedarf an einem benutzerfreundlichen Verfahren und System zur Visualisierung von Gebäude- und Wohnungsplänen. Ebenso besteht ein Bedarf an der Bereitstellung eines elektronischen dreidimensionalen Gebäude- oder Wohnungsplans aus einem computerlesbaren Gebäude- oder Wohnungsplan.

Der vorliegenden Erfindung liegt die Aufgabe zugrunde, die genannten Probleme zu lösen.

Die erfindungsgemäße Lösung sieht zum einen ein Verfahren zum Bereitstellen eines elektronischen dreidimensionalen Gebäude- oder Wohnungsplans aus einem computerlesbaren Gebäude- oder Wohnungsplan vor, das die folgenden Schritte umfasst:
das Bereitstellen des Gebäude- oder Wohnungsplans in computerlesbarer Form, vorzugsweise als CAD-Zeichnung,
das Isolieren des Grundrisses oder eines Grundrissteils des Gebäudes oder der Wohnung aus dem Gebäude- oder Wohnungsplan,
das Umwandeln des isolierten Grundrisses oder Grundrissteils in ein 3D-Grundmodell,
das Erkennen von Objekten im Gebäude- oder Wohnungsplan, insbesondere das Erkennen von Fenstern, Türen, Einrichtungsgegenständen, etc., und das Generieren von Platzhalter-Objekten der erkannten Objekte,
das Generieren des elektronischen dreidimensionalen Gebäude- oder Wohnungsplans durch Einfügen der Platzhalter-Objekte in das 3D-Grundmodell,
das Bereitstellen des dreidimensionalen Gebäude- oder Wohnungsplans auf einem Datenspeicher.

Das Erkennen von Objekten im Gebäude- oder Wohnungsplan kann einstufig oder mehrstufig erfolgen. Einfache Objekte, wie Fenster und Türen werden zweckmäßig und mit geringem Aufwand durch Ermitteln von vordefinierten Objekten, wie Fenster oder Türen, erkannt. Es gibt dafür in den Gebäude- und Wohnungsplänen standardisierte Symbole, die aufgrund ihrer Standardisierung leicht ermittelt werden können.

Für das Erkennen von komplexeren Objekten im Gebäude- oder Wohnungsplan, wie zum Beispiel Möbeln, sieht die Erfindung bevorzugt die Anwendung eines Object Recognition Systems vor.

Object Recognition ist eine Computervisualisierungstechnik zum Identifizieren von Objekten in Bildern oder Videos auf der Basis von z.B. deep learning oder machine learning Algorithmen. Unter deep learning, frei übersetzt "tiefgehendes Lernen", versteht man eine Klasse von Optimierungsmethoden künstlicher neuronaler Netze, die zahlreiche Zwischenebenen zwischen der Eingabeebene und der Ausgabeebene haben und dadurch eine umfangreiche innere Struktur aufweisen. Machine learning, auf Deutsch "maschinelles Lernen", ist ein Oberbegriff für die "künstliche" Generierung von Wissen aus Erfahrung. Ein künstliches System lernt aus Beispielen und kann diese nach Beendigung der Lernphase verallgemeinern. Dazu bauen Algorithmen beim maschinellen Lernen ein statistisches Modell auf, das auf Trainingsdaten beruht, in denen Muster und Gesetzmäßigkeiten erkannt werden. Es gibt mittlerweile eine Vielzahl von teilweise frei verfügbaren Object Recognition Systemen. Als Beispiele seien die Softwaresysteme Object Recognition Tensorflow und Object Recognition OpenCV genannt.

Um die Genauigkeit des zu erstellenden elektronischen dreidimensionalen Gebäude- oder Wohnungsplans zu erhöhen, sieht die Erfindung in einer Ausführungsform vor, dass das Einfügen der Platzhalter-Objekte in das 3D-Grundmodell das Abgleichen der Position der Platzhalter-Objekte mit dem isolierten Grundriss oder Grundrissteil umfasst.

Das Bereitstellen des dreidimensionalen Gebäude- oder Wohnungsplans kann einerseits auf einem Datenspeicher, wie einem USB-Stick, einem optischen oder magneto-optischen Datenspeicher oder einer Festplatte erfolgen. Bevorzugt umfasst das Bereitstellen des dreidimensionalen Gebäude- oder Wohnungsplans auf einem Datenspeicher jedoch das Speichern des dreidimensionalen Gebäude- oder Wohnungsplans auf einem Server, der für den Zugriff über eine Datenleitung oder ein Netzwerk zugänglich ist. Dadurch kann der erstellte dreidimensionale Gebäude- oder Wohnungsplan gleichzeitig von mehreren, lokalen oder entfernten Benutzern verwendet werden.

Die Erfindung löst die gestellten Aufgaben weiters durch ein Verfahren und ein System zur Visualisierung von Gebäude- und Wohnungsplänen, das auf einen gemäß dem oben beschriebenen Verfahren bereitgestellten elektronischen dreidimensionalen Gebäude- oder Wohnungsplan zugreift und diesen dreidimensional visualisiert.

Das erfindungsgemäße Verfahren zur Visualisierung von Gebäude- und Wohnungsplänen umfasst das Einlesen eines elektronischen dreidimensionalen Gebäude- oder Wohnungsplans in ein Virtual Reality System, das eine Virtual Reality Brille oder ein Virtual Reality Headset und einen mit der Virtual Reality Brille oder dem Virtual Reality Headset verbundenen Virtual Reality Rechner aufweist, auf dem eine Virtual Reality Visualisierungssoftware läuft, die den eingelesenen dreidimensionalen Gebäude- oder Wohnungsplan in der Virtual Reality Brille oder dem Virtual Reality Headset für einen Benutzer dreidimensional darstellt.

Um dem Benutzer die Möglichkeit zu geben, sich in den dargestellten virtuellen Räumen zu bewegen oder um reale Bewegungen des Benutzers in Bewegungen in den dargestellten virtuellen Räumen zu transformieren, erfasst gemäß einer Ausführungsform der Erfindung das Virtual Reality System zumindest einen Virtual Reality Controller und/oder zumindest einen Virtual Reality Sensor.

Zur Steigerung der Leistungsfähigkeit der Darstellung der virtuellen Räume ist es zweckmäßig, wenn die Virtual Reality Visualisierungssoftware eine dreidimensionale Grafik-Engine umfasst. Dabei kann beispielsweise die von der Firma Epic Games angebotene Unreal Engine verwendet werden.

Die Erfindung umfasst auch ein System zur Visualisierung eines elektronischen dreidimensionalen Gebäude- oder Wohnungsplans aus einem computerlesbaren Gebäude- oder Wohnungsplan, wobei vorzugsweise der dreidimensionale Gebäude- oder Wohnungsplan gemäß dem oben beschriebenen Verfahren bereitgestellt ist. Das erfindungsgemäße Visualisierungssystem zeichnet sich aus durch ein Virtual Reality System, das eine Virtual Reality Brille oder ein Virtual Reality Headset und einen mit der Virtual Reality Brille oder dem Virtual Reality Headset verbundenen Virtual Reality Rechner umfasst, auf dem eine Virtual Reality Visualisierungssoftware läuft, wobei der Virtual Reality Rechner den elektronischen dreidimensionalen Gebäude- oder Wohnungsplans zur Verarbeitung durch die Virtual Reality Visualisierungssoftware von einem Datenträger einliest oder über eine Datenleitung oder ein Netzwerk von einem Server abruft, wobei die Virtual Reality Visualisierungssoftware dazu ausgebildet ist, den eingelesenen oder abgerufenen dreidimensionalen Gebäude- oder Wohnungsplan in der Virtual Reality Brille oder dem Virtual Reality Headset für einen Benutzer dreidimensional darzustellen.

Bevorzugt umfasst das Virtual Reality System zumindest einen Virtual Reality Controller und/oder zumindest einen Virtual Reality Sensor. Weiters ist vorgesehen, dass die Virtual Reality Visualisierungssoftware eine dreidimensionale Grafik-Engine aufweist.

Um ungeübten Benutzern die Visualisierung von Räumen in einer Virtual Reality Welt zu erleichtern, sieht die Erfindung in einer Ausführungsform die Bereitstellung eines Assistenzrechners vor, der mit dem Virtual Reality Rechner über eine Datenverbindung, vorzugsweise ein drahtloses oder drahtgebundenes Netzwerk, kommuniziert und Parameter des von der Virtual Reality Visualisierungssoftware dargestellten Gebäudes oder der Wohnung steuert. Der/die vom Assistenzrechner gesteuerten Parameter können ausgewählt sein aus dem Aussehen, insbesondere der Farbe, der Textur, dem Muster von Böden, Wänden, Türen und Fenstern, der Art und dem Aussehen von Möblierung. Alternativ oder zusätzlich können die vom Assistenzrechner gesteuerten Parameter die virtuelle Fortbewegung des Benutzers in dem virtuellen dreidimensional dargestellten Gebäude oder Wohnung umfassen. Dadurch kann in der virtuellen Welt unerfahrenen Benutzern von einer Hilfsperson Hilfestellung beim Bewegen in der virtuellen Welt geboten werden.

Die Erfindung wird nun unter Bezugnahme auf die Zeichnungen anhand eines Ausführungsbeispiels näher erläutert, auf das die Erfindung jedoch nicht beschränkt ist.
Fig. 1 zeigt einen beispielhaften Wohnungsplan mit mehreren Räumen.
Fig. 2 zeigt den Wohnungsplan von Fig. 1, nachdem der Grundriss isoliert worden ist.
Fig. 3 zeigt aus dem Wohnungsplan von Fig. 1 generierte Platzhalter-Objekte.
Fig. 4 zeigt schematisch ein erfindungsgemäßes System zur Visualisierung von Gebäude- und Wohnungsplänen.

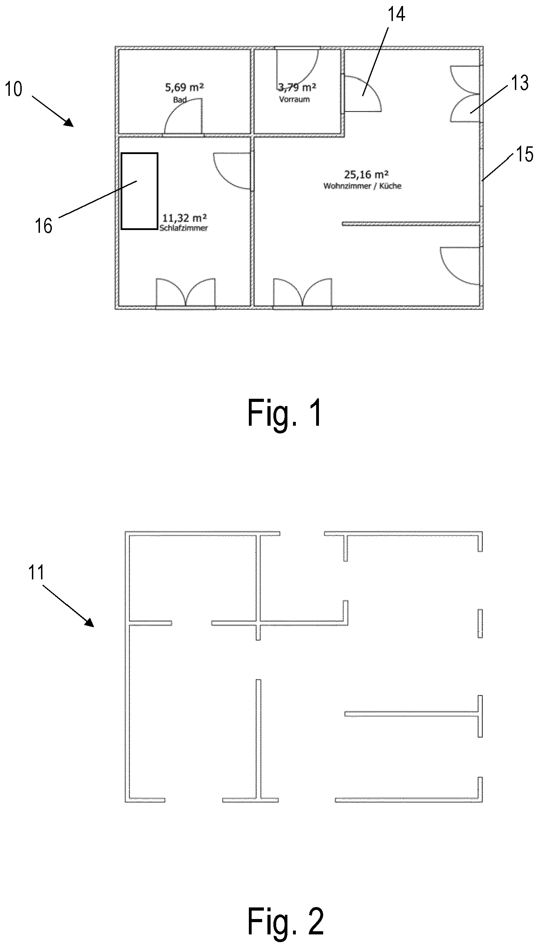

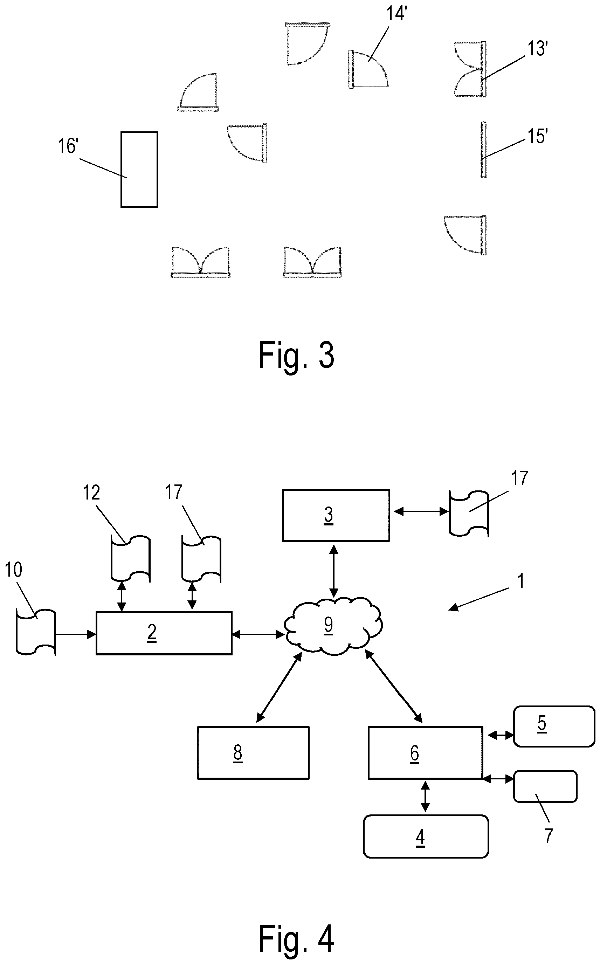

Anhand der Figuren 1 bis 3 wird nun zunächst das erfindungsgemäße Verfahren zum Bereitstellen eines elektronischen dreidimensionalen Gebäude- oder Wohnungsplans aus einem computerlesbaren Gebäude- oder Wohnungsplan beispielhaft näher erläutert. Fig. 1 stellt einen solchen computerlesbaren Gebäude- oder Wohnungsplan 10 in Form einer CAD-Zeichnung dar, der beispielhaft einen Wohnungsplan mit Schlafzimmer, Wohnküche, Vorraum und Bad zeigt. Dieser Gebäude- oder Wohnungsplan 10 wird in einen Plangenerierungs-Computer 2 (siehe Fig. 4) eingelesen, der als gewöhnlicher Rechner mit einem Prozessor, einem Arbeitsspeicher, einem Datenspeicher, Eingabe- und Ausgabeschnittstellen und einem Display ausgeführt sein kann. Auf diesem Plangenerierungs-Computer 2 läuft eine eigens entwickelte Software, die den eingelesenen Gebäude- oder Wohnungsplan analysiert und interpretiert. Dies geschieht in mehreren Schritten. Als erstes wird mit Hilfe von Algorithmen der Grundriss isoliert, d.h. alle nicht zum Grundriss gehörenden Elemente des Gebäude- oder Wohnungsplans 10 werden entfernt. Dadurch erhält man ein Grundrissplan 11, der nur Wände abbildet (siehe Fig. 2). Dieser Grundrissplan wird nun in ein digitales dreidimensionales (3D) Grundmodell 12 des Gebäudes bzw. der Wohnung umgewandelt, das im Plangenerierungs-Computer 2 zwischengespeichert wird (siehe Fig. 4).

Als nächstes wird ein Schritt des Erkennens von Objekten im Gebäude- oder Wohnungsplan 10 durchgeführt. Als Beispiele für solche Objekte finden sich im Gebäude- oder Wohnungsplan 10 Fenster 13, 15, Türen 14 und ein Möbelstück in Form eines Betts 16. Die Software generiert aus den erkannten Objekten 13, 14, 15, 16 diesen Objekten in Form, Größe und Position im Gebäude bzw. in der Wohnung entsprechende Platzhalter-Objekte 13', 14', 15', 16', siehe Fig. 3. Das Erkennen von Platzhalter-Objekten 13', 14', 15', 16' passiert auf zwei Arten. Die erste Variante dient für das Erkennen geometrisch bzw. symbolisch einfacher Objekte, wie zum Beispiel Türen 14 und Fenster 13, 15. Diese einfachen Objekte werden mittels Algorithmen oder Vergleich mit vordefinierten Objekten bzw. deren Plansymbolen erkannt. Die zweite Variante dient zum Erkennen von komplexeren Objekten, wie zum Beispiel Mobiliar, z.B. des Betts 16. Da diese komplexen Objekte in verschiedenen Formen und Größen existieren, wird zum Erkennen dieser Objekte ein in die Software integriertes Object Recognition System verwendet. Die Position aller erkannter Platzhalter-Objekte kann 13', 14', 15', 16' mit dem isolierten Grundriss 11 abgeglichen werden.

Die erkannten Platzhalter-Objekte 13', 14', 15', 16' können nun in das 3D Grundmodell 12 des Gebäudes bzw. der Wohnung eingesetzt werden, wodurch der elektronische dreidimensionale (3D) Gebäude- oder Wohnungsplan 17 generiert wird. Dieser dreidimensionale Gebäude- oder Wohnungsplan 17 kann einerseits auf Datenträgern und andererseits auf dem Server 3 zum Zugriff über ein Netzwerk 9 zur Verfügung gestellt werden.

Der dreidimensionale Gebäude- oder Wohnungsplan 17 steht nun jederzeit abrufbereit in dem in Fig. 4 schematisch dargestellten Virtual Reality System 1 für eine virtuelle Führung zur Verfügung. Das Virtual Reality (VR) System 1 umfasst mehrere Komponenten, insbesondere einen Virtual Reality Rechner 6, auf dem eine Virtual Reality Visualisierungssoftware zum Visualisieren des dreidimensionalen Gebäude- oder Wohnungsplans 17 in einer virtuellen Realität für einen Benutzer läuft. Zur Interaktion des Benutzers mit der Virtual Reality Visualisierungssoftware ist der Virtual Reality Rechner 6 mit einer VR-Headset bzw. einer VR-Brille 4 und eventuell mit einem VR-Controller 5 und VR-Sensoren 7 verbunden. Bei der VR-Brille 4, dem VR-Controller 5 und den VR-Sensoren 7 kann es sich um auf dem Markt verfügbare Standardprodukte handeln, die dem Fachmann wohlbekannt sind und daher keiner näheren Erläuterung bedürfen. Die Virtual Reality Visualisierungssoftware dient zur Visualisierung der bereitgestellten Gebäudedaten. Diese Software beinhaltet zum einem eine Grafikengine, um die Gebäudedaten drei dimensional darzustellen (z.B. Unreal Engine®) und die benötigten Softwarepakete für die Erzeugung der Virtual Reality (z.B. OpenVR SDK®).

Weiters umfasst das Virtual Reality System 1 in der dargestellten Ausführungsform einen Assistenzrechner 8, der mit dem Virtual Reality Rechner 6 über das Netzwerk 9 (alternativ über eine direkte Datenverbindung) kommuniziert. Auf dem Assistenzrechner 8 läuft eine Software, die das Assistieren in der Virtual Reality ermöglicht, indem sie Parameter der Virtual Reality Visualisierungssoftware bzw. der von der Virtual Reality Visualisierungssoftware dargestellten Räume und Objekte steuert. Zu diesen Parametern gehört zum Beispiel das Aussehen der Wände und Böden (Wandfarbe, Bodenbelag). Zudem kann man Anpassungen an der Möblierung des Gebäudes vornehmen, wie zum Beispiel: Art der Türen, Farbe der Fenster. Die Person, die die VR-Brille 4 trägt, kann sich dadurch voll und ganz auf die Betrachtung der virtuellen Räumlichkeiten konzentrieren. Da die Fortbewegung in der virtuellen Welt für Ungeübte nicht ganz einfach ist, bietet die auf dem Assistenzrechner laufende Assistenzsoftware die Möglichkeit, die virtuelle Bewegung zu unterstützen oder zu übernehmen. Dazu wird in der Assistenzsoftware der Grundriss des Gebäudes angezeigt und ebenso die aktuelle Position der Person in VR angezeigt und kann durch die Assistenzsoftware beeinflusst werden.

## Patentansprüche

1. Verfahren zum Bereitstellen eines elektronischen dreidimensionalen Gebäude- oder Wohnungsplans (17) aus einem computerlesbaren Gebäude- oder Wohnungsplan (10), **gekennzeichnet durch**
das Bereitstellen des Gebäude- oder Wohnungsplans (10) in computerlesbarer Form, vorzugsweise als CAD-Zeichnung,
das Isolieren des Grundrisses (11) oder eines Grundrissteils des Gebäudes oder der Wohnung aus dem Gebäude- oder Wohnungsplan (10),
das Umwandeln des isolierten Grundrisses (11) oder Grundrissteils in ein 3D-Grundmodell (12),
das Erkennen von Objekten im Gebäude- oder Wohnungsplan, insbesondere das Erkennen von Fenstern (13, 15), Türen (14), Einrichtungsgegenständen (16), etc., und das Generieren von Platzhalter-Objekten (13', 14', 15', 16') der erkannten Objekte (13, 14, 15, 16),
das Generieren des elektronischen dreidimensionalen Gebäude- oder Wohnungsplans (17) durch Einfügen der Platzhalter-Objekte (13', 14', 15', 16') in das 3D-Grundmodell (12),
das Bereitstellen des dreidimensionalen Gebäude- oder Wohnungsplans (17) auf einem Datenspeicher.

2. Verfahren nach Anspruch 1, **dadurch gekennzeichnet, dass** das Erkennen von Objekten im Gebäude- oder Wohnungsplan (10) das Ermitteln von vordefinierten Objekten, wie Fenster (13, 15) oder Türen (14), umfasst.

3. Verfahren nach Anspruch 1 oder 2, **dadurch gekennzeichnet, dass** das Erkennen von Objekten (16) im Gebäude- oder Wohnungsplan (10) die Verwendung eines Object Recognition Systems umfasst.

4. Verfahren nach einem der vorhergehenden Ansprüche, **dadurch gekennzeichnet, dass** das Einfügen der Platzhalter-Objekte (13', 14', 15', 16') in das 3D-Grundmodell (12) das Abgleichen der Position der Platzhalter-Objekte (13', 14', 15', 16') mit dem isolierten Grundriss (11) oder Grundrissteil umfasst.

5. Verfahren nach einem der vorhergehenden Ansprüche, **dadurch gekennzeichnet, dass** das Bereitstellen des dreidimensionalen Gebäude- oder Wohnungsplans (17) auf einem Datenspeicher das Speichern des dreidimensionalen Gebäude- oder Wohnungsplans (17) auf einem Server (3) umfasst, der für den Zugriff über eine Datenleitung oder ein Netzwerk (9) zugänglich ist.

6. Verfahren zur Visualisierung von Gebäude- und Wohnungsplänen, **gekennzeichnet durch** das Einlesen eines gemäß dem Verfahren zum Bereitstellen eines elektronischen dreidimensionalen Gebäude- oder Wohnungsplans (17) aus einem computerlesbaren Gebäude- oder Wohnungsplan (10) gemäß einem der Ansprüche 1 bis 5 bereitgestellten elektronischen dreidimensionalen Gebäude- oder Wohnungsplans (17) in ein Virtual Reality System (1), das eine Virtual Reality Brille (4) oder ein Virtual Reality Headset und einen mit der Virtual Reality Brille (4) oder dem Virtual Reality Headset verbundenen Virtual Reality Rechner (6) umfasst, auf dem eine Virtual Reality Visualisierungssoftware läuft, die den eingelesenen dreidimensionalen Gebäude- oder Wohnungsplan (17) in der Virtual Reality Brille (4) oder dem Virtual Reality Headset für einen Benutzer dreidimensional darstellt.

7. Verfahren nach Anspruch 6, **dadurch gekennzeichnet, dass** das Virtual Reality System (1) zumindest einen Virtual Reality Controller (5) und/oder zumindest einen Virtual Reality Sensor (7) umfasst.

8. Verfahren nach Anspruch 6 oder 7, **dadurch gekennzeichnet, dass** die Virtual Reality Visualisierungssoftware eine dreidimensionale Grafik-Engine umfasst.

9. Verfahren nach einem der Ansprüche 6 bis 8, **dadurch gekennzeichnet, dass** ein Assistenzrechner (8) bereitgestellt wird, der mit dem Virtual Reality Rechner (6) über eine Datenverbindung, vorzugsweise ein drahtloses oder drahtgebundenes Netzwerk (9), kommuniziert und Parameter des von der Virtual Reality Visualisierungssoftware dargestellten Gebäudes oder der Wohnung steuert.

10. Verfahren nach einem der Ansprüche 6 bis 9, **dadurch gekennzeichnet, dass** die vom Assistenzrechner (8) gesteuerten Parameter einen oder mehrere, ausgewählt aus dem Aussehen, insbesondere der Farbe, der Textur, dem Muster von Böden, Wänden, Türen und Fenstern, der Art und dem Aussehen von Möblierung, umfasst.

11. Verfahren nach einem der Ansprüche 6 bis 10, **dadurch gekennzeichnet, dass** die vom Assistenzrechner (8) gesteuerten Parameter die virtuelle Fortbewegung des Benutzers in dem virtuellen dreidimensional dargestellten Gebäude oder der Wohnung beeinflussen.

12. System zur Visualisierung eines elektronischen dreidimensionalen Gebäude- oder Wohnungsplans (17) aus einem computerlesbaren Gebäude- oder Wohnungsplan (10), wobei vorzugsweise der dreidimensionale Gebäude- oder Wohnungsplan (17) gemäß dem Verfahren nach einem der Ansprüche 1 bis 5 bereitgestellt ist, **gekennzeichnet durch** ein Virtual Reality System (1), das eine Virtual Reality Brille (4) oder ein Virtual Reality Headset und einen mit der Virtual Reality Brille (4) oder dem Virtual Reality Headset verbundenen Virtual Reality Rechner (6) umfasst, auf dem eine Virtual Reality Visualisierungssoftware läuft, wobei der Virtual Reality Rechner (6) den elektronischen dreidimensionalen Gebäude- oder Wohnungsplans (17) zur Verarbeitung durch die Virtual Reality Visualisierungssoftware von einem Datenträger einliest oder über eine Datenleitung oder ein Netzwerk (9) von einem Server (3) abruft, wobei die Virtual Reality Visualisierungssoftware dazu ausgebildet ist, den eingelesenen oder abgerufenen dreidimensionalen Gebäude- oder Wohnungsplan (17) in der Virtual Reality Brille (4) oder dem Virtual Reality Headset für einen Benutzer dreidimensional darzustellen.

13. Visualisierungssystem nach Anspruch 12, **dadurch gekennzeichnet, dass** das Virtual Reality System (1) zumindest einen Virtual Reality Controller (5) und/oder zumindest einen Virtual Reality Sensor (7) umfasst.

14. Visualisierungssystem nach Anspruch 12 oder 13, **dadurch gekennzeichnet, dass** die Virtual Reality Visualisierungssoftware eine dreidimensionale Grafik-Engine umfasst.

15. Visualisierungssystem nach einem der Ansprüche 12 bis 14, weiters umfassend einen Assistenzrechner (8), der mit dem Virtual Reality Rechner (6) über eine Datenverbindung, vorzugsweise ein drahtloses oder drahtgebundenes Netzwerk (9), kommuniziert und Parameter des von der Virtual Reality Visualisierungssoftware dargestellten Gebäudes oder der Wohnung steuert.

16. Visualisierungssystem nach einem der Ansprüche 12 bis 15, **dadurch gekennzeichnet, dass** die vom Assistenzrechner (8) gesteuerten Parameter einen oder mehrere, ausgewählt aus dem Aussehen, insbesondere der Farbe, der Textur, dem Muster von Böden, Wänden, Türen und Fenstern, der Art und dem Aussehen von Möblierung, umfasst.

17. Visualisierungssystem nach einem der Ansprüche 12 bis 16, **dadurch gekennzeichnet, dass** die vom Assistenzrechner (8) gesteuerten Parameter die virtuelle Fortbewegung des Benutzers in dem virtuellen dreidimensional dargestellten Gebäude oder der Wohnung beeinflussen.
